# EUROPÄISCHE PATENTANMELDUNG

(11) **EP 4 538 986 A1**
(43) Veröffentlichungstag der Anmeldung: **16.04.2025**
(21) Anmeldenummer: 24205456.7
(22) Anmeldetag: 09.10.2024
(51) Int. Cl.: G06V 10/22, G06V 10/25, G06V 10/26, G06V 10/764, G06V 10/82, G06V 20/58, G06V 20/56

(54) **VERFAHREN ZUM ERKENNEN EINES KOLLISIONSOBJEKTES ODER EINER DISKONTINUITÄT**

(30) Priorität: 10.10.2023 DE 102023127625
(71) Anmelder: EYYES GmbH, 3494 Gedersdorf (AT)
(72) Erfinder: Traxler, Johannes, 3500 Imbach (AT); Breiter, Michael, 52134 Herzogenrath (DE)
(74) Vertreter: Burgstaller, Peter

(57) **Zusammenfassung**

Verfahren zum Erkennen von Kollisionsobjekten (1) oder Diskontinuitäten in einem Bild,
welches Bild (2) durch eine Kamera (13) aufgenommen wird, welches Fahrzeug (10) auf einem Fahrstreifen (3) bewegt wird, wobei
mittels einer Recheneinheit in dem Bild der Fahrstreifen (3) als Beobachtungsbereich (4) detektiert wird, wobei mit der Recheneinheit fahrstreifenfremde Objekte durch ein bereichsweises Abtasten (5) des Beobachtungsbereiches (4) detektiert werden, wobei
in der Recheneinheit ein fahrstreifenfremdes Objekt als ein Kollisionsobjekt (1) oder als eine Diskontinuität eingestuft wird, wenn dieses fahrstreifenfremde Objekt in einer Anzahl von angrenzenden oder benachbarten Teilbereichen größer gleich einem Grenzwert erkannt wird, oder
in der Recheneinheit ein fahrstreifenfremdes Objekt als kein Kollisionsobjekt oder als keine Diskontinuität eingestuft wird, wenn dieses fahrstreifenfremde Objekt in einer Anzahl von angrenzenden oder benachbarten Teilbereichen kleiner einem Grenzwert erkannt wird,
welchen Grenzwert der Benutzer festlegt oder durch die Recheneinheit festgelegt wird.

## Beschreibung

Die im Folgenden diskutierte Erfindung betrifft ein Verfahren nach dem Oberbegriff des Anspruches 1.

Die Erfindung betrifft im Besonderen ein Verfahren zum Erkennen eines Kollisionsobjektes oder einer Diskontinuität in einem Fahrstreifen eines Fahrzeuges unter Verwendung eines Bildes als Eingangsdaten. Das im Folgenden beschriebene Verfahren kann als ein computerimplementiertes Verfahren ausgeführt werden.

Die Erfindung betrifft nicht die nach dem Stand der Technik bekannte Objekterkennung eines im Bild enthaltenen Objektes ab einer gewissen Objektgröße im Bild. Ein derartiger Stand der Technik ist für die im Folgenden offenbarte Erfindung nicht relevant.

In dem unter https://wiki.hshl.de/wiki/index.php/Objekterkennung mit Kam era abrufbaren Artikel wird die Erkennung eines Objektes auf einem Fahrstreifen behandelt. Es ist ein Grenzwert für eine Größe eines Objektes im Bild erwähnt. Ab einer Größe eines im Bild detektierten Teilbereiches mit den Eigenschaften eines Objektes wird ein in dem Teilbereich dargestelltes Objekt erkannt und gegebenenfalls klassifiziert.

Der im Anspruch 1 dieser Erfindung definierte Lösungsansatz betrifft den nachfolgenden sicherheitsrelevanten Aspekt der Einstufung eines erkannten Objektes als ein Kollisionsobjekt oder eine Diskontinuität oder keines der beiden nach einer erfolgten Erkennung. Die Erfindung betrifft somit die der Objekterkennung nachgelagerte Entscheidungsebene, nämlich die sicherheitsrelevante Einstufung eines erkannten Objektes.

Es ist Aufgabe des im Anspruch 1 der Erfindung definierten Lösungsansatzes, für die Bewegung des Fahrzeuges relevante Objekte, welche relevanten Objekte in der Erfindung als Kollisionsobjekte oder Diskontinuitäten definiert sind, von nicht relevanten Objekten zu unterscheiden.

Im Unterschied zu den oben kurz beschriebenen, nach dem Stand der Technik bekannten Verfahren, welche eine Objektgröße als eine Schwelle für eine Objekterkennung einführen, werden bei der vorliegenden Erfindung alle Objekte im Fahrstreifen erkannt, sofern dies durch technische Mittel umsetzbar ist, und danach als relevant oder nicht relevant eingestuft. Im Unterschied zu den oben erwähnten bekannten Verfahren der Objekterkennung mit der Objektgröße als Schwelle können bei dem erfindungsgemäßen Verfahren alle Objekte einer weiteren Verarbeitung zugeführt werden.

Das Bild wird mit einer auf dem Fahrzeug angeordneten Kamera erstellt. Die Kamera ist in eine Fahrtrichtung des Fahrzeuges gerichtet, was sowohl eine gleiche Ausrichtung der Kameraachse und der Fahrrichtung als auch eine von der Fahrtrichtung abweichende Ausrichtung der Kameraachse impliziert. Die Kamera ist so ausgerichtet, dass zumindest ein Teilbereich des Fahrstreifens, vorzugsweise ein möglichst großer Teil des Fahrstreifens von der Kamera aufgenommen wird.

Es wird das Fahrzeug auf dem Fahrstreifen bewegt.

Ein Kollisionsobjekt, im Besonderen ein relevantes Kollisionsobjekt kann eine Person oder ein Fahrzeug oder ein sonstiges festes oder verformbares Objekt sein. Zur Vermeidung von Schäden am Kollisionsobjekt oder am Fahrzeug soll ein Kontakt oder eine Kollision zwischen dem relevanten Kollisionsobjekt und dem Fahrzeug vermieden werden oder diese Kollision angezeigt werden. Ein relevantes Kollisionsobjekt hat einen Einfluss auf die Bewegung des Fahrzeuges.

Das Fahrzeug kann eine Bearbeitungsmaschine sein. Das Kollisionsobjekt kann ein Hindernis oder nicht von der Bearbeitungsmaschine zu zerstörendes oder beschädigendes Objekt sein.

Eine Diskontinuität ist ein von einem vorherrschenden Zustand des Fahrstreifens abweichender Zustand des Fahrstreifens. Eine Diskontinuität kann beispielsweise ein Schaden im Fahrstreifen sein. Eine relevante Diskontinuität hat einen Einfluss auf die Bewegung des Fahrzeuges.

Das Fahrzeug kann beispielswiese ein auf einem Gleis als Fahrstreifen fahrendes Schienenfahrzeug oder ein auf einem Fahrstreifen einer Straße fahrendes Auto sein. Es ist eine Kollision des Schienenfahrzeuges mit einer Person oder mit einem weiteren Fahrzeug zu unterbinden oder eine solche mögliche Kollision anzuzeigen.

Eine Unterbindung oder ein Anzeigen einer möglichen Kollision des Fahrzeuges mit einem Kollisionsobjekt setzt voraus, dass das Kollisionsobjekt, im Besonderen das relevante Kollisonsobjekt als solches erkannt wird. Ein hierauf eingeleitetes Unterbinden einer Kollision kann durch ein Eingreifen einer Person oder durch ein automatisches Eingreifen in die Steuerung des Fahrzeuges sein, was jedoch nicht Teil der Erfindung ist.

Eine Unterbindung oder ein Anzeigen einer möglichen Kollision des Fahrzeuges mit einem Kollisionsobjekt unter Verwendung von Bilddaten eines Bildes setzt eine Analyse der Bilddaten beispielsweise unter Anwendung von künstlichen neuronalen Netzen voraus, was wiederum eine ausreichende Rechenleistung einer Recheneinheit erfordert. Das erfindungsgemäße Verfahren stellt sich die durch technische Mittel zu lösende Aufgabe, das Verfahren des Erkennens eines möglichen oder tatsächlichen Kollisionsobjektes effektiv zu gestalten.

Die Bewertung, ob tatsächlich das Kollisionsobjekt oder die Diskontinuität einen Einfluss auf die Bewegung des Fahrzeuges hat, ist nicht Teil der Erfindung. Der Gegenstand der Erfindung ist lediglich, mögliche derartige Objekte und Diskontinuitäten in einer effizienten Weise zu erkennen.

DE102013101833 und DE102019003530 bilden einen allgemeinen, nicht relevanten Stand der Technik zu dem Gegenstand der Erfindung.

Das in DE102005045017 offenbarte Verfahren ist nicht ausschließlich dazu geeignet, ein fahrstreifenfremdes Objekt zu erkennen. Das in DE102005045017 offenbarte Verfahren ist nicht dazu geeignet, ein fahrstreifenfremdes Objekt als ein mögliches Kollisionsobjekt oder als eine Diskontinuität in einem Bild einzustufen.

Der Anspruch 1 definiert einen Lösungsansatz.

Dieser Lösungsansatz sieht vor, das
mittels einer Recheneinheit in dem Bild zumindest der Fahrstreifen als Beobachtungsbereich detektiert wird, wobei mit der Recheneinheit fahrstreifenfremde Objekte durch ein bereichsweises Analysieren von Teilbereichen des Beobachtungsbereiches detektiert werden,
wobei sich ein fahrstreifenfremdes Objektbildpunkt des fahrstreifenfremden Objekts in dem Bild von einem Fahrstreifenbildpunkt des Fahrstreifens unterscheidet, wobei
mit der Recheneinheit eine Anzahl von angrenzenden Teilbereichen mit einem Objektbildpunkt des fahrstreifenfremden Objektes als ein Maß für die relevante Größe des im Bild detektierten fahrstreifenfremden Objektes ermittelt wird, und wobei
in der Recheneinheit ein fahrstreifenfremdes Objekt der fahrstreifenfremden Objekte als ein Kollisionsobjekt oder als eine Diskontinuität im Beobachtungsgereich eingestuft wird, wenn aneinander angrenzende Objektbildpunkte dieses fahrstreifenfremden Objektes in einer Anzahl von angrenzenden oder benachbarten Teilbereichen größer gleich einem Grenzwert erkannt werden,
welcher Grenzwert in der Recheneinheit in Abhängigkeit einer Geschwindigkeit des Fahrzeuges und/oder die Relativgeschwindigkeit des Fahrzeuges zu dem fahrstreifenfremden Objekt und/oder der Auflösung des Bildes und/oder und/oder einer Klassifikation des fahrstreifenfremden Objektes definiert ist.

Es wird somit durch den Grenzwert eine Schwelle in Abhängigkeit der Geschwindigkeit des Fahrzeuges und/oder der Auflösung des Bildes definiert, ab welcher Schwelle ein fahrstreifenfremdes Objekt eine hinreichende Größe aufweist und in einen nachfolgenden Verfahrensschritt zur Kollisionsvermeidung eingeht. Die Bewertung, ob das fahrstreifenfremde Objekt mit einer hinreichenden Größe tatsächlich ein Kollisionsobjekt ist, ist nicht Teil der hier offenbarten Erfindung.

Eine Detektion des Fahrstreifens kann unter Anwendung von Verfahren nach dem Stand der Technik wie Kantendetektion, Analyse von Bildpunkten unter Anwendung von künstlicher Intelligenz erfolgen. Es ist keine weitere Erläuterung dieser nach dem Stand der Technik bekannten Verfahren erforderlich.

Die Detektion des Fahrstreifens kann eine Angabe über Fahrstreifenbildteilbereiche des Bildes umfassen, d.h. in welchen Teilbereichen des Bildes der Fahrstreifen angeordnet ist. Dieser mögliche Verfahrensschritt kann unter Anwendung von Verfahren nach dem Stand der Technik erfolgen.

Die Detektion des Fahrstreifens kann eine vektorielle Angabe des Fahrstreifens im Bild umfassen.

Die Detektion des fahrstreifenfremden Objektes erfolgt unter Anwendung von Verfahren nach dem Stand der Technik auf der Basis eines Vergleiches von Teilbereichen des Beobachtungsbereiches wie beispielsweise Bildpunkten. Es können Verfahren basierend auf einer Kantendetektion oder der Anwendung von künstlicher Intelligenz erfolgen. Ein fahrstreifenfremdes Objekt wird im Bild als ein solches nach dem Kriterium erkannt, dass ein Objektbildpunkt eine andere messbare Eigenschaft wie Farbe oder Grauwert als ein Fahrstreifenbildpunkt aufweist. Das erfindungsgemäße Verfahren kann Verfahrensschritte umfassen, in welchen Verfahrensschritten die Eigenschaft der Bildpunkte gemessen werden. Die erwähnte Unterscheidung kann auch so erfolgen, dass Mengen von ähnlichen Bildpunkten ermittelt werden.

Vorzugsweise erfolgt das Detektieren eines fahrstreifenfremden Objektes, insbesondere das Detektieren von Objektbildpunkten durch eine bereichsweise Analyse von Teilbereichen. Es kann diese Analyse ab einem Ausgangspunkt im Bild in eine vorgegebene Richtung oder nach einer vorgegebenen Systematik ausgeführt werden. Es kann der Beobachtungsbereich in Teilbereiche unterteilt werden, wobei ein Teilbereich nach einem weiteren Teilbereich nach einer vorgegebenen Systematik analysiert wird.

Ein solcher Teilbereich einer bereichsweisen Analyse des Fahrstreifens kann ein Bildpunkt des Bildes oder ein durch geometrische Angaben definierter Bereich sein.

Es wird die Anzahl der angrenzenden oder benachbarten Teilbereiche ermittelt, in welchen in einer einzigen Richtung angrenzenden oder benachbarten Teilbereichen ein einziges fahrstreifenfremdes Objekt oder ein Objektbildpunkt eines solchen detektiert wird. Die Anzahl der angrenzenden oder benachbarten Teilbereiche dient in den weiteren Verfahrensschritten als eine Größenangabe des im Bild detektierten Objektes.

Der Grenzwert kann durch einen Benutzer vorgegeben sein. Die Vorgabe des Grenzwertes kann insbesondere als ein Kalibrierungsschritt verstanden sein, wobei dieser Grenzwert gleichsam wie weitere von dem Benutzer vorgebbare Werte iterativ festgelegt werden.

Der Grenzwert kann durch eine mathematische Funktion vorgegeben sein, durch welche mathematische Funktion der Grenzwert oder auch ein nachstehend erwähnter weiterer Grenzwert in Abhängigkeit der Auflösung des Bildes und/oder der Geschwindigkeit des Fahrzeuges und/oder der Relativgeschwindigkeit des Fahrzeuges zu dem fahrstreifenfremden Objekt und/oder Beschleunigung des Fahrzeuges definiert wird. Das erfindungsgemäße Verfahren kann zur Umsetzung eines solchen Verfahrensschrittes das Messen der Auflösung des Bildes oder der Geschwindigkeit des Fahrzeuges oder der Beschleunigung des Fahrzeuges umfassen.

Der Grenzwert kann in Abhängigkeit einer Klassifikation des fahrstreifenfremden Objektes festgelegt sein. Dies schließt ein, dass das fahrstreifenfremde Objekt klassifiziert wird. Die Recheneinheit kann Daten umfassen, wie der Grenzwert oder der unten erwähnte weitere Grenzwert bei einer durch die Klassifizierung des Objektes ermittelten Objektklasse zu definieren ist.

Es können die Bildauflösung und/oder die Geschwindigkeit und/oder die Relativgeschwindigkeit und/oder Anteil der Störsignale im Bild durch eine Recheneinheit über eine Analyse des Bildes ermittelt werden, wobei Verfahren nach dem Stand der Technik zur Anwendung kommen können.

Der Grenzwert kann durch die Recheneinheit wie folgt festgelegt werden. Es können die Bildauflösung und/oder die Geschwindigkeit und/oder die Relativgeschwindigkeit und/oder Anteil der Störsignale im Bild Eingangswerte darstellen, wobei die Recheneinheit mittels einer mathematischen Funktion den Grenzwert ermittelt und ausgibt. Die mathematische Funktion kann grundsätzlich die folgenden Verhältnisse berücksichtigen.

Je geringer die Bildauflösung, desto geringer der Grenzwert.

Je höher die Geschwindigkeit, desto größer der Grenzwert. Das erfindungsgemäße Verfahren kann die Messung der Geschwindigkeit des Fahrzeuges umfassen.

Das erfindungsgemäße Verfahren kann auch die Detektion von Rauschen (auch als Störsignalen bezeichnet) Bim Bild, im Besonderen in dem den Fahrstreifen umfassenden Teilbereich des Bildes oder im Besonderen in einem an das fahrstreifenfremde Objekt angrenzenden Teilbereiche des Bildes umfassen.

Ein Rauschen im Bild kann den Effekt haben, dass ein fahrstreifenfremdes Objekt durch das Störsignal verdeckt ist und das fahrstreifenfremde Objekt nicht in seiner gesamten Größe detektierbar ist. Je größer der Anteil der Störsignale in dem Bild oder in den erwähnten Teilbereich ist, desto geringer wird der Grenzwert aus sicherheitstechnischen Überlegungen gesetzt.

Ein Rauschen im Bild kann den Effekt haben, die Kanten des fahrstreifenfremden Objektes im Bild verwischt und/oder verzerrt sind, wodurch das fahrstreifenfremde Objekt im Bild vergrößert dargestellt ist, weil die Kanten nicht eindeutig erkannt werden können. Es sind nach der gängigen Lehre Verfahren zur Unterscheidung, ob ein Objekt durch das Rauschen verdeckt oder verzerrt ist. Im Falle eines Verzerrens und einer Vergrößerung des Objektes wird der Grenzwert erhöht.

Im Rahmen der Offenbarung der Erfindung wird unter einem relevanten Kollisionsobjekt ein fahrstreifenfremdes Objekt verstanden, welches Objekt die Bewegung des Fahrzeuges beeinflusst. Das relevante Kollisionsobjekt kann bei einer Kollision mit dem Fahrzeug einen Schaden am Fahrzeug hervorrufen. Das relevante Kollisionsobjekt kann bei einer Kollision mit dem Fahrzeug einen Schaden erleiden. Das fahrstreifenfremde Objekt kann beispielsweise eine Person sein.

In der obigen Beschreibung sind angrenzende Teilbereiche und benachbarte Teilbereiche erwähnt. Aneinander angrenzende Teilbereiche kontaktieren einander oder sind überlappend. Aneinander angrenzende Teilbereiche weisen zueinander keinen Abstand auf. Benachbarte Teilbereiche weisen zueinander einen Abstand auf.

Der Anspruch 2 definiert einen weiteren Lösungsansatz.

Erfindungsgemäß wird dies dadurch erreicht, dass mittels einer Recheneinheit in dem Bild zumindest der Fahrstreifen als Beobachtungsbereich detektiert wird, wobei mit der Recheneinheit fahrstreifenfremde Objekte durch ein bereichsweises Analysieren von Teilbereichen des Beobachtungsbereiches detektiert werden,
wobei sich ein Objektbildpunkt des fahrstreifenfremden Objekts im Bild von einem Fahrstreifenbildpunkt des Fahrstreifens unterscheidet, wobei
mit der Recheneinheit eine Anzahl von angrenzenden oder benachbarten Teilbereichen mit einem Objektbildpunkt des fahrstreifenfremden Objektes als ein Maß für die Größe des im Bild detektierten fahrstreifenfremden Objektes oder der Diskontinuität ermittelt werden, und wobei
in der Recheneinheit ein fahrstreifenfremdes Objekt als ein Kollisionsobjekt oder als eine Diskontinuität in dem Fahrbahnstreifen eingestuft wird, wenn aneinander angrenzende Objektbildpunkte dieses fahrstreifenfremden Objektes in einer Anzahl von angrenzenden oder benachbarten Teilbereichen größer gleich einem Grenzwert erkannt werden, und
in der Recheneinheit ein fahrstreifenfremdes Objekt als kein Kollisionsobjekt oder als keine Diskontinuität in dem Fahrbahnstreifen eingestuft wird, wenn Objektbildpunkte dieses fahrstreifenfremden Objektes in einer Anzahl von angrenzenden oder benachbarten Teilbereichen kleiner einem Grenzwert erkannt werden,
welcher Grenzwert von einem Benutzer oder in Abhängigkeit einer Geschwindigkeit des Fahrzeuges und/oder der Relativgeschwindigkeit des Fahrzeuges zu dem fahrstreifenfremden Objekt und/oder der Auflösung des Bildes und/oder einer Klassifikation des fahrstreifenfremden Objektes definiert ist.

Durch den Vergleich der Anzahl der Teilbereiche mit dem Grenzwert wird bei den durch den Anspruch 1 und den Anspruch 2 definierten Lösungsansätzen ein Kriterium eingeführt, durch welches Kriterium ein sich von dem Fahrstreifenbildpunkt unterscheidender Teilbereich als ein Objektbildpunkt eines relevanten möglichen Kollisionsobjektes oder als eine Störung im Bild erkannt wird. Die Anzahl der Teilbereiche kann als eine Größenangabe für das in dem Bild detektierte fahrstreifenfremde Objekt verstanden werden. Das erfindungsgemäße Verfahren zeichnet sich durch seine Fehlerresistenz aus.

Durch das erfindungsgemäße Verfahren kann weiters ein sich von dem Fahrstreifenbildpunkt unterscheidender Teilbereich als ein Objektbildpunkt einer relevanten Diskontinuität in dem Fahrbahnstreifen fehlerresistent erkannt werden. Eine relevante Diskontinuität hat einen Einfluss auf die Bewegung des Fahrzeuges. Die relevante Diskontinuität wie zum Beispiel ein Schaden in dem Fahrstreifen kann bei einer Kollision mit dem Fahrzeug einen Schaden am Fahrzeug hervorrufen.

Durch die in dem durch den Anspruch 2 definierte Einstufung des Objektes wird ein Ausgabewert geschaffen, welcher Ausgabewert eine Unterbindung einer Kollision des Fahrzeuges mit dem Kollisionsobjekt unterbinden kann. Der Ausgabewert kann einer das Fahrzeug lenkenden Person angezeigt werden oder an eine Steuerungseinheit des Fahrzeuges übermittelt werden. Der Ausgabewert kann die Markierung eines relevanten Kollisionsobjektes oder einer relevanten Diskontinuität im Bild umfassen. Die Bildpunkte des markierten Kollisionsobjekte oder der markierten Diskontinuität kann einer in der Recheneinheit oder einer weiteren Recheneinheit durchzuführenden Objekterkennung und/oder eine Kollisionsanalyse zugeführt werden. Ergänzend oder alternativ zu der Markierung des Kollisionsobjektes oder der Diskontinuität können auch als kein Kollisionsobjekt oder als keine Diskontinuität eingestufte fahrstreifenfremde Objekte markiert werden.

Das durch den Anspruch 2 definierte erfindungsgemäße Verfahren schließt keine fahrstreifenfremden Objekte von der weiteren Verarbeitung aus. Bei dem erfindungsgemäßen Verfahren werden alle fahrstreifenfremden Objekte verarbeitet. Es können beispielsweise alle fahrstreifenfremden Objekte an einer Anzeigeeinheit angezeigt werden, wobei die Kollisionsobjekte und/oder die Diskontinuitäten als die relevanten Objekte mit einem Einfluss auf die Bewegung des Fahrzeugs durch eine Umrahmung markiert werden. Alternativ oder ergänzend hierzu können auch die Objekte ohne Einfluss auf die Bewegung des Fahrzeuges mit einer Umrahmung markiert werden.

Vorzugsweise werden die relevanten Objekte und die nicht relevanten Objekte durch unterschiedliche Umrahmungen als ein graphisches Mittel gekennzeichnet.

Der Benutzer kann die Einstufung der fahrstreifenfremden Objekte als relevante Objekte oder als nicht relevante Objekte verändern.

Das erfindungsgemäße Verfahren kann sich dadurch auszeichnen, dass
in der Recheneinheit ein fahrstreifenfremdes Objekt als ein Kollisionsobjekt oder als eine Diskontinuität eingestuft wird, wenn aneinander angrenzende Objektbildpunkte dieses fahrstreifenfremden Objektes in einer Anzahl angrenzenden oder benachbarten Zeilen Teilbereichen kleiner gleich einem weiteren Grenzwert erkannt werden.

Der weitere Grenzwert kann als ein oberer Grenzwert verstanden werden, während der oben erwähnte Grenzwert als ein unterer Grenzwert verstanden werden kann. Der weitere Grenzwert ist somit ein von dem oben erwähnten Grenzwert unterschiedlicher Wert. Eine Erstreckung von Objektbildpunkten eines einzigen Objektes in einer Anzahl von angrenzenden oder benachbarten Teilbereichen in einer Richtung kann durch das Einführen des weiteren Grenzwertes als eine Störung verstanden werden.

Das erfindungsgemäße Verfahren kann sich dadurch auszeichnen, dass das bereichsweise Analysieren als ein Analysieren von einem angrenzenden oder benachbarten Teilbereich nach einem weiteren angrenzenden oder angrenzenden Teilbereich durchgeführt wird.

Es kann ein Teilbereich wie beispielsweise ein Bildpunkt des Bildes in einem Teilschritt des erfindungsgemäßen Verfahrens analysiert werden. In einem nachfolgenden Teilschritt kann ein zu dem Teilbereich benachbarter oder angrenzender weiterer Teilbereich wie beispielsweise ein weiterer Bildpunkt analysiert werden.

Die obige Beschreibung des erfindungsgemäßen Verfahrens umfasst das Merkmal des Ermittelns der Anzahl von Objektbildpunkten in angrenzenden Teilbereichen. Ein Analysieren von angrenzenden Teilbereichen in einer nacheinander folgenden Reihenfolge kann eine effiziente Ausführungsform des erfindungsgemäßen Verfahrens darstellen.

Das erfindungsgemäße Verfahren kann sich dadurch auszeichnen, dass das bereichsweise Analysieren als ein zeilenweises Analysieren von Teilbereichen, insbesondere angrenzenden oder benachbarten Teilbereichen durchgeführt wird.

Da ein Bild nach der gängigen Lehre einen zeilenweisen Aufbau von Bildpunkten aufweist, kann die Analyse der Bildpunkte in einer durch die Zeilen der Bildpunkte vorgegebenen Richtung durchgeführt werden. Das eine fahrstreifenfremde Objekt erstreckt sich somit über mehrere Zeilen. Es wird die Anzahl ermittelt, über welche Anzahl von angrenzenden Zeilen sich das fahrstreifenfremde Objekt erstreckt.

In einer vorteilhaften Weise kann das zeilenweise Analysieren so erfolgen, dass aneinander angrenzende Zeilen des Beobachtungsbereiches analysiert werden.

In einer weiter vorteilhaften Weise kann das zeilenweise Analysieren so erfolgen, dass zueinander benachbarte und somit zueinander beabstandete Zeilen des Beobachtungsbereiches analysiert werden. Es kann beispielsweise nur jede n-te (mit n≥2) Zeile analysiert werden.

Ein Analysieren von benachbarten Teilbereichen wie das hier diskutierte Analysieren von benachbarten und beabstandeten Zeilen erlaubt eine Reduktion des Rechenaufwandes. Es kann insbesondere der Rechenaufwand reduziert werden, ohne dass die Qualität des Bildes reduziert wird. Dies erlaubt eine weitere Verarbeitung von Bildinformationen des Bildes in nachfolgenden Verfahrensschritten.

Das erfindungsgemäße Verfahren kann sich dadurch auszeichnen, dass
das fahrstreifenfremde Objekt durch ein auf einer Kantendetektion oder künstliche Intelligenz basierendes Verfahren erkannt wird.

Ein auf Kantendetektion basierendes Verfahren der Ermittlung eines fahrstreifenfremden Objektes kann darauf basieren, dass ein Gradient beschreibend Eigenschaften von benachbarten oder angrenzenden Bildpunkten ermittelt wird und der Gradient mit einem Referenzgradienten oder einem weiteren Gradienten verglichen wird.

Ein auf künstlicher Intelligenz basierendes Verfahren der Ermittlung eines fahrstreifenfremden Objektes kann darauf basieren, dass in einer Datenbank eine Referenzeigenschaft eines Referenzbildpunktes eines Objektes abgespeichert ist, welche Referenzeigenschaft mit der Eigenschaft eines Bildpunktes verglichen wird. In Abhängigkeit einer Übereinstimmung der Referenzeigenschaft und der Eigenschaft wird der Bildpunkt der Fahrbahn oder einem fahrbahnfremden Objekt zugewiesen.

Ergänzend oder alternativ hierzu kann eine Referenzbildpunkt eines Fahrstreifens in einer Datenbank abgespeichert sein. Das Objekt wird als ein fahrstreifenfremdes Objekt durch eine Diskrepanz zwischen dem Objektbildpunkt und dem Referenzbildpunkt eines Fahrstreifens erkannt.

Die oben erwähnten Verfahren können auf der Betrachtung eines Bildpunktes oder eines kleinen Teilbereiches des Bildes basieren, was jedoch die Gefahr einer nicht richtigen Zuweisung des kleinen Teilbereiches oder des Bildpunktes mit sich bringt. Es kann beispielsweise eine Störung im Bild fälschlicher Weise als ein potentielles Kollisionsobjekt erkannt werden. Die Möglichkeit einer unrichtigen Zuweisung kann über das oben beschriebene Kriterium reduziert werden, nach welchem Kriterium die Anzahl der Zeilen mit dem Grenzwert verglichen werden.

Das erfindungsgemäße Verfahren kann sich dadurch auszeichnen, dass das fahrstreifenfremde Objekt durch einen Vergleich zumindest eines Bildteilbereiches des Bildes mit einem Referenzbildteilbereich eines Referenzbildes erkannt wird.

Das erfindungsgemäße kann sich dadurch auszeichnen, dass in der Recheneinheit eine Mittelachse des Beobachtungsbereiches ermittelt wird,
wobei das fahrstreifenfremde Objekt durch ein um die Mittelachse symmetrisch bereichsweises, insbesondere zeilenweises Analysieren von Teilbereichen des Beobachtungsbereiches erfolgt.

Die Mittelachse erstreckt sich im Wesentlichen in Fahrtrichtung, was eine Erstreckung der Mittelachse parallel zu der Fahrtrichtung und hiervon abweichend impliziert. Es wird die vorteilhafte Wirkung dieser Ausführungsform anhand einer Figur untenstehend diskutiert.

Das erfindungsgemäße Verfahren kann sich dadurch auszeichnen, dass der Fahrstreifen durch seitliche Markierungen des Fahrstreifens detektiert wird.

Es können seitliche Markierungen detektiert werden. Es werden beispielsweise Markierungen detektiert, welche Markierungen im Verkehrswesen üblich sind. Der Fahrstreifen kann als ein sich zwischen den Markierungen erstreckender Bereich definiert werden.

Es können die auf eine Straße aufgebrachten Begrenzungsmarkierungen oder sonstige Markierungen wie Leitschienen oder Leitpfosten als Markierungen angesehen werden. Es können die Schienen eines Gleises für ein schienengebundenes Fahrzeug als Markierungen detektiert werden.

Die Detektion der Markierungen kann nach den oben erwähnten Verfahren, insbesondere unter Anwendung von künstlichen neuronalen Netzen erfolgen. Die Detektion der Markierungen kann insbesondere einen Abgleich mit einer Datenbank umfassen. Die Datenbank kann beispielsweise eine Bereichsangabe umfassen, durch welche Bereichsangabe ein Bereich der Schienen eines von dem Fahrzeug befahrenen Gleises vorgeben ist. Die Detektion der Schienen als Markierungen kann auf diesen durch die Bereichsangabe festgelegten Bereich eingeschränkt sein.

Die Bereichsangabe kann die Lage der Schienen in der Nähe des Fahrzeuges im Bild betreffen. Die Lage der Schienen im Bild in der Ferne des Fahrzeuges wird nach dem Grundsatz ermittelt, dass Schienen eine durchgehende Linie im Bild darstellen.

Das erfindungsgemäße Verfahren kann sich dadurch auszeichnen, dass
ein Beobachtungsbereich größer als der Fahrsteifen definiert wird.

Im Besonderen bei einem Schienenfahrzeug ist der vom Schienenfahrzeug eingenommenen Fahrstreifen größer, im Besonderen breiter als der sich zwischen den Schienen erstreckende Bereich. Es kann der Beobachtungsbereich als ein durch Begrenzungen definierter Bereich sein, welche Begrenzungen sich zu den Begrenzungen des Fahrstreifens parallel oder in einem Abstand hierzu erstrecken.

Das erfindungsgemäße Verfahren kann sich dadurch auszeichnen, dass
das Verfahren unter Verwendung eines zu einem ersten Zeitpunkt aufgenommenen ersten Bildes unter Abtasten von n1 Zeilen und
das Verfahren unter Verwendung eines zu einem zweiten Zeitpunkt aufgenommenen zweiten Bildes unter Abtasten von n2 Zeilen durchgeführt wird.

Das Fahrzeug kann mit einer Geschwindigkeit bewegt werden, sodass das erste Bild an einer ersten Position des Fahrzeuges zu einem ersten Zeitpunkt und das zweite Bild an einer zweiten Position des Fahrzeuges zu einem zweiten Zeitpunkt aufgenommen wird.

Die erwähnten Werte n1 und n2 können gleich oder unterschiedlich sein. Es kann die Anzahl der Zeilen n1, n2 in Abhängigkeit der Geschwindigkeit des Fahrzeuges gewählt werden. Je höher die Geschwindigkeit des Fahrzeuges ist, desto höher kann die Anzahl der Zeilen gewählt werden.

Das erfindungsgemäße Verfahren kann sich dadurch auszeichnen, dass
das zweite Bild das Referenzbild ist.

Das erfindungsgemäße Verfahren kann sich dadurch auszeichnen, dass
die Recheneinheit zu mehreren Zeitpunkten die Anzahl der Teilbereiche ermittelt, wobei
die Recheneinheit das fahrstreifenfremde Objekt als ein Kollisionsobjekt oder eine Diskontinuität einstuft, wenn die Anzahl der Teilbereiche zu den Zeitpunkten gleichbleibend oder größerwerdend ist, oder
die Recheneinheit das fahrstreifenfremde Objekt al kein Kollisionsobjekt oder keine Diskontinuität einstuft, wenn die Anzahl der Teilbereiche zu den Zeitpunkten kleinerwerdend ist.

Es kann auch die Tendenz der Anzahl der Teilbereiche als ein Kriterium für das oben beschriebene Einstufen des fahrstreifenfremden Objektes verwendet werden. Der Fachmann kennt Verfahren nach dem Stand der Technik, welche ein Glätten von einer schwankenden Anzahl der Teilbereiche erlauben, sodass das fahrstreifenfremde Objekt nicht abwechselnd als Kollisionsobjekt oder kein Kollisionsobjekt beziehungsweise als Diskontinuität oder keine Diskontinuität erkannt wird.

Der Anspruch 13 zeigt eine weitere erfindungsgemäße Lösung auf.

Erfindungsgemäß wird dies dadurch erreicht, dass mittels einer Recheneinheit in dem Bild zumindest der Fahrstreifen als Beobachtungsbereich detektiert wird, wobei mit der Recheneinheit ein fahrstreifenfremdes Objekt detektiert wird,
wobei die Recheneinheit eine Erstreckung des fahrstreifenfremden Objektes ermittelt, wobei die Recheneinheit die Erstreckung des fahrstreifenfremden Bildes mit einer in einer Datenbank hinterlegten Schwellenerstreckung vergleicht, wobei
in der Recheneinheit ein fahrstreifenfremdes Objekt als ein Kollisionsobjekt oder als eine Diskontinuität im Beobachtungsbereich eingestuft wird, wenn die Erstreckung des fahrstreifenfremden Objektes größergleich der Schwellenerstreckung ist, oder
in der Recheneinheit ein fahrstreifenfremdes Objekt als keine Kollisionsobjekt oder als keine Diskontinuität erkannt wird, wenn die Erstreckung des fahrstreifenfremden Objektes kleiner als die Schwellenerstreckung ist.

Nach dem Stand der Technik kann ein Objekt in einem Bild detektiert werden. Ein solcher Verfahrensschritt kann beispielsweise auf der Durchführung einer Kantendetektion im Bild basieren, wobei der so ermittelte Teilbereich des Bildes oder diesen Teilbereich beschreibende Parameter mit einem Referenzbild verglichen wird.

Die Recheneinheit kann unter Anwendung von Verfahren nach dem Stand der Technik die Erstreckung des fahrstreifenfremden Objektes im Bild ermitteln. Die Erstreckung kann eine Angabe einer Dimension und/oder der Größe und/oder der Fläche und/oder eines Umfanges und/oder einer sonstigen geometrischen Eigenschaft des fahrstreifenfremden Objektes umfassen.

Die Erstreckung kann ein Zahlenwert oder eine Vektorangabe sein.

Die erfindungsgemäße Lösung sieht weiters vor, dass die Erstreckung als ein Entscheidungskriterium herangezogen wird, ob das fahrstreifenfremde Objekt als ein Kollisionsobjekt oder eine Diskontinuität eingestuft wird. Mit anderen Worten soll ermittelt werden, ob das fahrstreifenfremde Objekt als ein Kollisionsobjekt oder eine Diskontinuität für die Fortbewegung des Objektes relevant ist. Andernfalls wird das fahrstreifenfremde Objekt als keine relevantes Kollisionsobjekt oder als keine Diskontinuität oder als beispielsweise eine Störung im Bild angesehen. Die Recheneinheit trifft diese Entscheidung durch einen Vergleich der ermittelten Erstreckung mit einer Sollerstreckung.

Das erfindungsgemäße Verfahren kann sich dadurch auszeichnen, dass
die Recheneinheit zu mehreren Zeitpunkten die Erstreckung ermittelt, wobei
die Recheneinheit das fahrstreifenfremde Objekt als ein Kollisionsobjekt oder eine Diskontinuität einstuft, wenn die Erstreckung zu den Zeitpunkten gleichbleibend oder größerwerdend ist, oder
die Recheneinheit das fahrstreifenfremde Objekt als kein Kollisionsobjekt oder keine Diskontinuität einstuft, wenn die Erstreckung zu den Zeitpunkten kleinerwerdend ist.

Es kann auch die Tendenz der Erstreckung als ein Kriterium für das oben beschriebene Einstufen des fahrstreifenfremden Objektes verwendet werden. Der Fachmann kennt Verfahren nach dem Stand der Technik, welche ein Glätten von einer schwankenden Anzahl der Teilbereiche erlauben, sodass das fahrstreifenfremde Objekt nicht abwechselnd als Kollisionsobjekt oder kein Kollisionsobjekt beziehungsweise als Diskontinuität oder keine Diskontinuität erkannt wird.

Die hier offenbarte Erfindung betrifft auch ein Verfahren zur Definition eines Interessensbereiches in einem Bild. Dieses durch die Ansprüche 15 bis 17 definierte Verfahren kann auch als unabhängiges Verfahren durchgeführt werden.

Das weitere Verfahren ist ein Verfahren zum Erkennen eines Kollisionsobjektes oder einer Diskontinuität in einem Bild.

Das Bild wird durch zumindest eine Kamera aufgenommen, welche Kamera in eine Fahrtrichtung gerichtet auf einem Fahrzeug angeordnet ist. Es werden die mit der zumindest einen Kamera ermittelten Bilddaten zu einer Recheneinheit übermittelt. Die Recheneinheit analysiert die Bilddaten unter Anwendung von Verfahren nach dem Stand der Technik wie beispielsweise unter Anwendung von neuronalen Netzen.

Die Recheneinheit kann am Fahrzeug angeordnet sein. Eine solche Anordnung der Recheneinheit hat den Vorteil, dass die Übertragung der Bilddaten von der Kamera zu der Recheneinheit auf Distanzen im Fahrzeug beschränkt ist. Jedoch ist durch eine solche Anordnung der Recheneinheit die Recheneinheit an eine Anordnung im Fahrzeug anzupassen. Die Recheneinheit kann folglich eine geringere Rechenleistung aufweisen.

Die Recheneinheit kann außerhalb des Fahrzeuges angeordnet sein. Es kann die Recheneinheit bei einer solchen Anordnung eine größere Rechenleistung aufweisen, jedoch müssen die Bilddaten über größere Distanzen übertragen werden.

In beiden Fällen ist die Datenmenge der zu verarbeitenden oder zu übertragenden Bilddaten zu beschränken.

Es wird das Fahrzeug auf einem Fahrstreifen bewegt. In einem weiteren Verfahren, welches weitere Verfahren diesem hier beschriebenen erfindungsgemäßen Verfahren nachgelagert ist, werden die Bilddaten unter Anwendung von neuronalen Netzen analysiert. Ein Ergebnis dieser rechenintensiven Analyse eines Bildes kann eine Feststellung oder Abschätzung sein, ob auf dem Fahrstreifen ein Kollisionsobjekt ist oder der Fahrstreifen eine Diskontinuität aufweist, welches Kollisionsobjekt und/oder welche Diskontinuität einen Schaden am Fahrzeug verursachen kann.

Die hier offenbarte Erfindung stellt sich die technische Aufgabe, die Datenmenge oder Datengröße der zwischen der Kamera und der Recheneinheit übermittelten Bilddaten zu minimieren.

Erfindungsgemäß wird dies durch den Anspruch 15 erreicht. Das im Anspruch 15 definierte Verfahren kann auch unabhängig von den in den vorgegangenen Verfahrensschritten definierten ausgeführt werden.

Erfindungsgemäß wird dies dadurch erreicht, dass
in einer Recheneinheit ein Interessensbereich im Bild ermittelt wird,
wobei eine Lage und eine Erstreckung des
Interessensbereiches im Bild durch den Fahrstreifen und gegebenenfalls durch einen an den Fahrstreifen angrenzenden Bereich mit einer vorgegebenen Breite definiert ist.

In der obigen Beschreibung ist die Bestimmung des Fahrstreifens beschrieben. Dieser Verfahrensschritt ist zur Durchführung des Verfahrens nach Anspruch 15 auszuführen.

Es kann der Interessensbereich im Bild seitlich durch die Erstreckung des Fahrstreifens definiert sein.

Es kann die im Bild linke und rechte Kante des Fahrstreifens detektiert werden. Der in seiner seitlichen Ausdehnung dem Fahrstreifen entsprechende Interessensbereich kann durch die linke Kante und/oder rechte Kante des Fahrstreifens detektiert sein.

Es kann der Fahrstreifen und folglich der Interessensbereich im Bild unten durch die untere Bildkante begrenzt sein. Es kann der Fahrstreifen und folglich der Interessensbereich im Bild oben durch die obere Bildkante oder durch einen Horizont des Fahrstreifens begrenzt sein.

Der Interessensbereich kann dem im Bild ersichtlichen und folglich detektierbaren Fahrstreifen entsprechen.

Der Anwender erwartet das Vorkommen von möglichen Kollisionsobjekten in dem Interessensbereich. Der Anwender oder der Programmierer kann beispielsweise ein bereichsweises oder zeilenweises Detektieren von Kollisionsobjekten auf den Interessensbereich beschränken.

Es kann der Abstand zwischen den Bereichen zum bereichsweisen Detektieren, insbesondere der Abstand zwischen den Zeilen für das zeilenweise Detektieren in dem Interessensbereich kleiner als in den an den Interessensbereich angrenzenden Teilbereichen des Bildes gewählt werden.

Erfindungsgemäß kann die oben erwähnte Aufgabenstellung auch dadurch gelöst werden, dass
in einer Recheneinheit in dem Bild den Interessensbereich durch Grenzflächen eines detektierten Objektes definiert, welches Objekt in einer Recheneinheit unter Erstellung der Grenzflächen mit einem neuronalen Netz detektiert wird.

Der Interessensbereich kann weiters auf ein detektiertes Objekt beschränkt werden. Die Analyse des Bildes wird auf dieses detektierte Objekt, welches Objekt ein mögliches Kollisionsobjekt darstellt, konzentriert.

Nach der gängigen Lehre wird bei einer Detektion eines Objektes in dem Bild die Grenzfläche (englisch bonding boxes) definiert. Der Interessensbereich wird durch die Grenzflächen des Objektes definiert. Die Erstreckung und die Lage des Interessensbereiches werden somit durch die Grenzfläche des Objektes definiert. Der Interessensbereich entspricht dem Grenzbereich des detektierten Objektes.

Das im Bild detektierte Objekt, dessen Grenzflächen den Interessensbereich definieren, kann am Fahrstreifen oder in der Nähe des Fahrstreifens angeordnet sein. Es können hierzu die Bereichsangaben des Fahrstreifens mit den Positionsangaben des Objektes in der Recheneinheit in der Recheneinheit abgeglichen werden. Bei einer Überschneidung des Fahrstreifenbereiches und der Objektposition oder bei einer Unterschreitung eines Abstandes zwischen dem Fahrstreifenbereiches und der Objektposition wird die Objektposition als eine Position am Fahrstreifen oder in der Nähe des Fahrstreifens angesehen.

Das erfindungsgemäße Verfahren kann sich dadurch auszeichnen, dass
der Interessensbereich im Bild mit einer ersten Bildauflösung an die Recheneinheit übermittelt wird und die an den Interessensbereich angrenzenden Teilbereiche des Bildes mit einer zweiten Bildauflösung an die Recheneinheit übermittelt wird, sodass
eine Klassifikation des Objektes in der Recheneinheit mit einem neuronalen Netz unter Verwendung der ersten Bildauflösung durchgeführt wird und
eine Analyse der an den Interessensbereich angrenzenden Teilbereiche in der Recheneinheit mit einem neuronalen Netz unter Verwendung der zweiten Bildauflösung durchgeführt wird,
wobei die erste Bildauflösung höher ist als die zweite Bildauflösung.

Da die zweite Bildauflösung geringer ist als die erste Bildauflösung, wird die von der Kamera an die Recheneinheit übertragene Bilddatenmenge reduziert. Dieser technische Effekt kann dadurch verstärkt werden, dass die an den Interessensbereich angrenzenden Teilbereiche des Bildes mit der zweiten Bildauflösung flächenmäßig größer als der Interessensbereich mit der ersten Bildauflösung.

Die Kamera kann das gesamte Bild mit der ersten Auflösung aufnehmen und die so erstellten Bilddaten an die Recheneinheit übermitteln. In der Recheneinheit kann die Bildauflösung der an den Interessensbereich angrenzenden Teilbereiche von der ersten Bildauflösung zu der zweiten Bildauflösung reduziert werden, um anschließend das Objekt als ein Kollisionsobjekt oder kein Kollisionsobjekt zu klassifizieren.

### Zu Anspruch 17:

Es ist auch denkbar, dass das Bild mit einer Kamera mit einer zweiten Bildauflösung aufgezeichnet wird. Das erfindungsgemäße Verfahren kann sich dadurch auszeichnen, dass der Interessensbereich mit einer weiteren Kamera mit einer ersten Bildauflösung aufgenommen wird.

Es kann in dem mit der Kamera erstellten Bild mit der zweiten Auflösung der Interessensberiech definiert werden. Die weitere Kamera kann auf der Grundlage dieser Daten so ausgerichtet werden, dass die weitere Kamera Bilddaten mit der ersten Bildauflösung über den Interessensbereich erstellt.

Die weitere Kamera kann ein weiteres Bild mit der ersten Bildauflösung zumindest umfassend den Interessensbereich erstellen. Es wird ein Bildausschnitt des weiteren Bildes, welcher Bildausschnitt zumindest den durch das Bild definierten Interessensbereich umfasst, an die Recheneinheit übermittelt.

Der Fachmann kann die oben beschriebenen Lösungsvorschläge miteinander kombinieren.

Die Erfindung wird anhand der folgenden, in den Figuren dargestellten Ausführungsformen ergänzend erläutert:
Fig. 1 zeigt eine Seitenansicht eines Fahrzeuges zur Durchführung des erfindungsgemäßen Fahrzeuges,
Fig. 2 veranschaulicht die Durchführung einer Ausführungsform des erfindungsgemäßen Verfahrens,
Fig. 3 zeigt ein mit einer Kamera aufgenommenes Bild,
Fig. 4 veranschaulicht eine Ausführungsform des erfindungsgemäßen Verfahrens zu einem Zeitpunkt t1,
Fig. 5 veranschaulicht eine Ausführungsform des erfindungsgemäßen Verfahrens zu einem Zeitpunkt t2,
Fig. 6 veranschaulicht die Durchführung einer Ausführungsform des erfindungsgemäßen Verfahrens.

Die in den Figuren gezeigten Ausführungsformen zeigen lediglich mögliche Ausführungsformen, wobei an dieser Stelle bemerkt sei, dass die Erfindung nicht auf diese speziell dargestellten Ausführungsvarianten derselben eingeschränkt ist, sondern auch Kombinationen der einzelnen Ausführungsvarianten untereinander und eine Kombination einer Ausführungsform mit der oben angeführten allgemeinen Beschreibung möglich sind. Diese weiteren möglichen Kombinationen müssen nicht explizit erwähnt sein, da diese weiteren möglichen Kombinationen aufgrund der Lehre zum technischen Handeln durch gegenständliche Erfindung im Können des auf diesem technischen Gebiet tätigen Fachmannes liegen.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsformen können für sich eigenständige erfinderische Lösungen darstellen. Die den eigenständigen erfinderischen Lösungen zugrundeliegende Aufgabe kann der Beschreibung entnommen werden.

In den Figuren sind die folgenden Elemente durch die vorangestellten Bezugszeichen gekennzeichnet:
- 1: Kollisionsobjekt
- 2: Bild
- 3: Fahrstreifen
- 4: Beobachtungsbereich
- 5: zeilenweises Analysieren
- 6: Mittelachse
- 7: Markierung
- 8: Ausgangspunkt
- 9: Begrenzungslinien
- 10: Fahrzeug
- 11: Gleis
- 12: Fahrtrichtung
- 13: Kamera
- 14: Kameraachse
- 15: Schienen
- 16: weitere Schienen
- 17: Betonplattenkanten
- 18: Person im Beobachtungsbereich
- 19: Person
- 20: Spalt
- 21: erste Zeile
- 22: zweite Zeile
- 23: dritte Zeile
- 24: vierte Zeile
- 25: erste Richtung
- 26: zweite Richtung
- 27: dritte Richtung
- 28: vierte Richtung
- 29: Fußball
- 30: weiteres Objekt
- 31: Grenzfläche

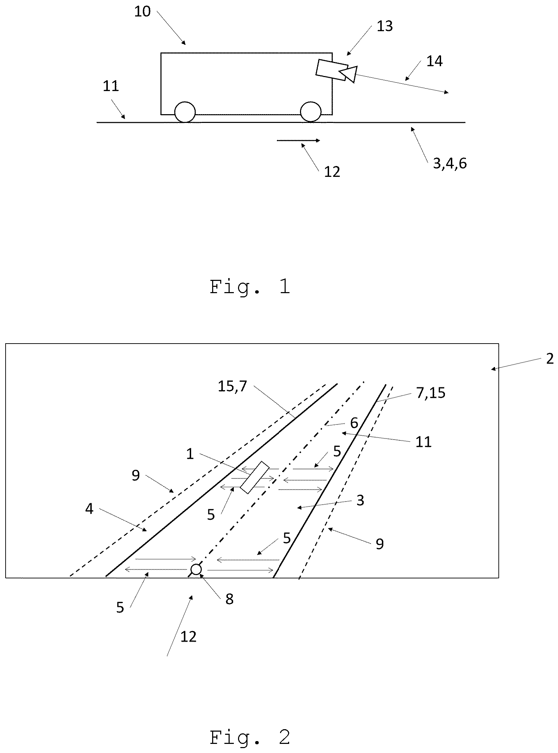

### Zu Figur 1:

Die Figur 1 zeigt beispielhaft eine Seitenansicht eines Fahrzeuges 10, welches Fahrzeug 10 insbesondere auf einem Gleis 11 in eine Fahrtrichtung 12 bewegt wird. Das Fahrzeug 10 umfasst eine Kamera 13 mit einer Kameraachse 14. Durch die Kameraachse 14 ist die Ausrichtung der Kamera 13 definiert.

Die Kameraachse 14 ist in die Fahrtrichtung 12 orientiert. Die Orientierung der Kameraachse 14 in die Fahrtrichtung 12 wird in der Figur 1 durch eine mögliche Mindestanforderung erreicht, dass eine in der Figur 1 nicht eingetragene horizontale Komponente der Kameraachse 14 und die horizontale Komponente der Bewegungsrichtung 12 zueinander parallel orientiert sind. Die vertikalen Komponenten der Kameraachse 14 und der Bewegungsrichtung 12 weisen eine Abweichung auf.

Das Fahrzeug 10 wird auf einem einen Fahrstreifen 3 definierenden Gleis 11 bewegt.

### Zu Figur 2:

Es wird eine Ausführungsform des erfindungsgemäßen Verfahrens zum Erkennen eines Kollisionsobjektes 1 oder einer Diskontinuität in einem Bild 2 anhand der Figur 2 diskutiert. Es kann das Bild 2 mit einer Kamera 13 aufgenommen werden, wie diese in der Figur 1 dargestellt ist. Es ist ebenso das Fahrzeug 10 in der Figur 1 dargestellt.

Das Fahrzeug 10 umfasst eine Recheneinheit, mit welcher Recheneinheit das Bild 2 unter Anwendung von Verfahren nach der gängigen Lehre analysiert wird. Da die Recheneinheit wegen ihrer Anordnung im Fahrzeug 10 eine mobile Einheit ist, weist die Recheneinheit nur eine begrenzte Rechenkapazität auf. Diese führt zu der oben erwähnten Aufgabenstellung des erfindungsgemäßen Verfahrens, nämlich die Aufbereitung der Bilddaten eines Bildes, sodass eine effiziente Analyse durchgeführt werden kann.

Das erfindungsgemäße Verfahren zeichnet sich dadurch aus, dass mittels einer Recheneinheit in dem Bild 2 zumindest der Fahrstreifen 3 als Beobachtungsbereich 4 nach Verfahren nach der gängigen Lehre detektiert wird. Die Detektion des Fahrstreifens 3 und die Definition zumindest dieses als Beobachtungsbereich 4 liefert zumindest räumliche Angaben über den Beobachtungsbereich 4 im Bild 2. Da das Bild 2 zweidimensionale Angaben umfasst, sind die oben erwähnten räumlichen Angaben vorzugsweise zweidimensionale Angaben des Bildes 2.

Das erfindungsgemäße Verfahren zeichnet sich dadurch aus, dass mit der Recheneinheit fahrstreifenfremde Objekte durch ein bereichsweises Analysieren 5 von Teilbereichen und im Besonderen zeilenweises Analysieren 5 (wie in Figur 2 dargestellt) von Zeilen des Beobachtungsbereiches 4 detektiert werden. Beginnend ab einem Ausgangspunkt 8 wird der Beobachtungsbereich 4 bereichsweise, im Besonderen zeilenweise auf fahrstreifenfremde Objekte untersucht.

Ein Bild weist im Allgemeinen durch die Anordnung der Bildpunkte einen zeilenweisen Aufbau auf. Wegen dieses durch die Bildpunkte vorgegebenen zeilenweisen Aufbaus ist ein zeilenweises Analysieren nahegelegt. Dieses wird auch als vorteilhaft angesehen, da die zeilenweisen angeordneten Bildpunkte ein zeilenweises Analysieren leicht erlauben. Der Vorgang des Analysierens der Teilbereiche des Beobachtungsbereiches 4, hier beispielhaft der Bildunkte des Beobachtungsbereiches 4 wird auch als ein Abtasten des Beobachtungsbereiches 4 bezeichnet.

Es wird ein fahrstreifenfremdes Objekt durch eine Analyse von Teilbereichen, hier der Bildpunkte detektiert. Ein Objektbildpunkt eines fahrstreifenfremden Objektes unterscheidet sich durch eine Eigenschaft von den Fahrstreifenbildpunkt des Fahrstreifens 3. Es können unter Anwendung von Verfahren nach der gängigen Lehre die Bildpunkte eines Objektes erkannt werden.

Es wird weiters definiert, dass sich ein einziges relevantes fahrstreifenfremdes Objekt über mehrere Zeilen erstreckt. Diese Definition schließt ein, dass sich ein tatsächlich auftretendes fahrstreifenfremdes Objekt über mehrere Zeilen erstrecken muss, d.h. es muss eine bestimmte Größe im Bild 2 aufweisen, sodass es als ein relevantes, mögliches Kollisionsobjekt 1 oder eine Diskontinuität im Fahrstreifen 3 erkannt werden kann. Ansonsten wird das fahrstreifenfremde Objekt wegen seiner anhand der Erstreckung über eine Anzahl von Zeilen gemessenen geringen Relevanz als kein relevantes Kollisionsobjekt oder als keine relevante Diskontinuität im Fahrstreifen 3 erkannt. Das erfindungsgemäße Verfahren zeichnet sich dadurch aus, dass die Erstreckung des fahrstreifenfremden Objektes über Teilbereiche, insbesondere Zeilen oder Bildpunkte auch als ein Maß für die Relevanz des Objektes in der durch das Bild 2 festgehaltenen Situation angesehen wird.

Diese Definition geht wie folgt in das Einstufen eines durch einen Teilbereich wie einen Objektbildpunkt gegebenen fahrstreifenfremden Objektes als ein Kollisionsobjekt 1, insbesondere als ein mögliches Kollisionsobjekt 1 ein. Ein fahrstreifenfremdes Objekt wird als ein Kollisionsobjekt 1 klassifiziert, wenn dieses auch durch einen angrenzenden Teilbereich, insbesondere Bildpunkt gegebene Objekt in einer Anzahl von nacheinander folgenden Zeilen größer gleich einem Grenzwert detektierbar ist. Es wird ein fahrstreifenfremdes Objekt als ein Kollisionsobjekt 1 klassifiziert, wenn dieses Objekt sich als ein einziges sich über n größer gleich dem Grenzwert Zeilen erstreckendes Objekt detektierbar ist.

Es geht ein fahrstreifenfremdes Objekt nicht als ein Kollisionsobjekt 1 in das erfindungsgemäße Verfahren ein, wenn sich das Objekt über eine Anzahl von Zeilen kleiner gleich einem Grenzwert als ein einiges Objekt erstreckt.

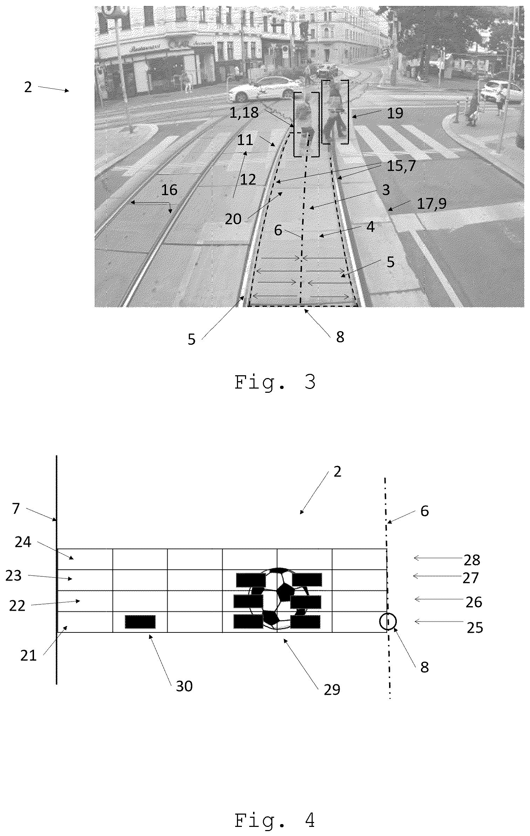

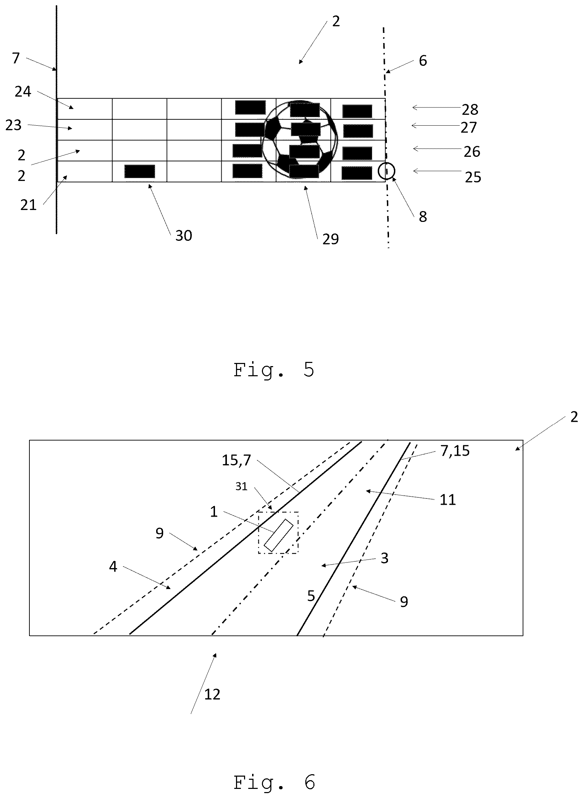

Die hier offenbarte Beschreibung einer Ausführungsform des erfindungsgemäßen Verfahrens ist auf das zeilenweise Analysieren von Zeilen als Teilbereiche des Beobachtungsbereiches 4 gerichtet, weil in der Figur 2 und auch in der Figur 4 sowie in der Figur 5 Zeilen dargestellt sind. Der Fachmann kann auch andere Teilbereiche als Zeilen wählen und eine an die Form der Teilbereiche angepasste Analyseform wählen. Die hier beschriebene zeilenweise Analyse stellt eine Sonderform des erfindungsgemäßen Verfahrens dar.

Der Grenzwert kann von einem Benutzer vorgegeben sein.

Der Grenzwert kann auch in Abhängigkeit der Geschwindigkeit des Fahrzeuges 10 und/oder der Relativgeschwindigkeit des Fahrzeuges zu dem fahrstreifenfremden Objekt und/oder der Auflösung des Bildes 2 definiert sein. Es ist die obige Beschreibung anzuwenden.

Das erfindungsgemäße Verfahren kann sich dadurch auszeichnen, dass das fahrstreifenfremde Objekt durch ein auf einer Kantendetektion oder künstliche Intelligenz basierendes Verfahren erkannt wird. Es sind die erwähnten Verfahren nach dem Stand der Technik bekannt und darüber hinaus oben beschrieben.

Das erfindungsgemäße Verfahren kann sich dadurch auszeichnen, dass das fahrstreifenfremde Objekt durch einen Vergleich zumindest eines Bildteilbereiches des Bildes 2 mit einem Referenzbildteilbereich eines Referenzbildes erkannt wird, wie dies oben beschrieben ist.

Das erfindungsgemäße Verfahren kann sich dadurch auszeichnen, dass in der Recheneinheit eine Mittelachse 6 des Beobachtungsbereiches 4 ermittelt wird,
wobei das fahrstreifenfremde Objekt durch ein um die Mittelachse 6 symmetrisches, zeilenweises Analysieren der Teilbereiche des Beobachtungsbereiches 4 erfolgt.

Die Mittelachse 6 erstreckt sich - wie dies beispielsweise aus der Figur 1 und der Figur 2 hervorgeht - in Fahrtrichtung 12. Dies impliziert eine parallele Orientierung der Fahrtrichtung 12 und der Mittelachse 6 sowie auch eine geringfügige Abweichung zwischen diesen. Es sind die Fahrtrichtung 12 und die Mittellinie 6 beispielsweise in der in Figur 1 gezeigten Ansicht als deckungsgleiche Linien eingetragen. Es sind die Fahrtrichtung 12 und die Mittellinie 6 beispielsweise in der in Figur 2 gezeigten Ansicht als voneinander abweichende Linien dargestellt. Die in Figur 2 dargestellte Abweichung kann dadurch begründet sein, dass die Kameraachse 14 im Grundriss (keine Figur hierzu) nicht in Fahrtrichtung 12 ausgerichtet ist. Die Offenbarung des erfindungsgemäßen Verfahrens ist keinesfalls auf diese erwähnte Ausrichtung der Kameraachse 14 zu der Fahrtrichtung 12 beschränkt.

Das erfindungsgemäße Verfahren kann sich dadurch auszeichnen, dass der Fahrstreifen 3 durch seitliche Markierungen 7 des Fahrstreifens 3 detektiert wird. Die Figur 1 und die Figur 2 zeigen das Beispiel, dass der Fahrstreifen 3 durch ein Erkennen der Schienen 15 als Markierungen 7 erkannt werden.

Das erfindungsgemäße Verfahren kann sich dadurch auszeichnen, dass ein Beobachtungsbereich 4 größer als der Fahrsteifen 3 definiert wird. Die Figur 2 zeigt diesen Sonderfall. Der Beobachtungsbereich 4 ist durch Begrenzungslinien 9 definiert, welche Begrenzungslinien 9 sich in einem Abstand zu den Markierungen 7 oder dem Gleis 11 parallel oder unter Berücksichtigung der in Figur 2 dargestellten Perspektive erstrecken.

### Zu Figur 3:

Die Figur 3 veranschaulicht das erfindungsgemäße Verfahren zum Erkennen eines Kollisionsobjektes 1 oder einer Diskontinuität in einem Bild 2, welches Bild 2 mit einer auf einem schienengebundenen Fahrzeug 10 Kamera 13 erstellt wird. Es ist im Fahrzeug 10 die Recheneinheit zur Analyse des Bildes 2 angeordnet.

Das schienengebundene Fahrzeug 10 wird auf Fahrstreifen 3 bewegt, welcher Fahrstreifen 3 durch die Schienen 15 des Gleises 11 seitlich begrenzt ist.

Das erfindungsgemäße Verfahren zeichnet sich dadurch aus, dass mittels einer Recheneinheit in dem Bild 2 zumindest der Fahrstreifen 3 als Beobachtungsbereich 4 detektiert wird. Der Beobachtungsbereich 4 folgt im Besonderen wie in der Figur 3 dargestellt der Bogenform der Schienen 15. Es ist der Beobachtungsbereich 4 in der Figur 3 durch gestrichelte Linien dargestellt.

Die Figur 3 zeigt den Sonderfall, dass im Bild 2 neben den Schienen 15 des Fahrstreifens 3 auch weitere Schienen 16 dargestellt sind. Das erfindungsgemäße Verfahren kann unter der Annahme, dass die Kameraachse 14 in seitlicher Richtung keine große Verstellung aufweist, die in der Bildmitte angeordneten Schienen 15 als die Schienen des Fahrstreifens 3.

Das erfindungsgemäße Verfahren kann auch umfassen, dass die Erstreckung des Beobachtungsbereiches 4 in Fahrtrichtung 12 durch eine geometrische Angabe begrenzt wird.

Es werden mit der Recheneinheit fahrstreifenfremde Objekte durch ein in Figur 3 dargestelltes, zeilenweises Analysieren 5 von Teilbereichen des Beobachtungsbereiches 4 detektiert, wobei sich ein Objektbildpunkt des Objekts im Bild 2 von einem Fahrstreifenbildpunkt des Fahrstreifens 3 unterscheidet. Diese unter Anwendung von Verfahren nach der gängigen Lehre durchgeführte Detektion von fahrstreifenfremden Objekten, wobei bei Verfahren nach dem Stand der Technik keine zeilenweise Detektion zwingend ist, ist sohin auf den Beobachtungsbereich 4 beschränkt.

Eine zeilenweise Detektion kann eine Definition einer Zeilengröße miteinschließen. Die Zeilen können beispielsweise durch die zeilenweise Anordnung der Bildpunkte im Bild 2 vorgegeben sein, wobei eine einzige Reihe von Bildpunkten eine einzige Zeile ausbilden kann. Eine Zeile kann auch durch mehrere Reihen von Bildpunkten definiert sein. Der Fachmann wählt die Zeilengröße in Abhängigkeit der Qualität des Bildes 2 und in Hinblick auf die erforderliche Genauigkeit des erfindungsgemäßen Verfahrens.

Es ist in der Figur 3 die zeilenweise Analyse des Beobachtungsbereiches 4 ab einen Ausgangspunkt 8 auf der Mittelachse 6 des Gleises 11 als Fahrstreifen 3 durch die Pfeile 5 eingetragen. Zur Wahrung der Übersichtlichkeit sind die Zeilen in der Figur 3 nicht eingetragen. Der Leser kann sich die Zeilengröße als beispielsweise ein Bereich zwischen zwei Pfeilen vorstellen. Die Zeilen können als überlappende Bereiche oder als zueinander angrenzende oder als zueinander benachbarte Bereiche definiert sein.

Bei dem in Figur 3 gezeigten Anwendungsfall liegt das Bild in einer FHD-Auflösung (1920x1080 Bildpunkte) vor. Durch eine Analyse nur des Beobachtungsbereiches 4 und einer Analyse von nur jeder dritten Zeile des Beobachtungsbereiches 4 kann der erforderliche Rechenaufwand auf geschätzt ein Zehntel zu einer Analyse des gesamten Bildes 2 einschließlich jeder Zeile reduziert werden.

In Analogie zu einer Analyse von nur jeder n-ten Zeile kann auch nur jeder k-te Bildpunkt (mit k≥2, k=n oder k^n) analysiert werden. Es kann so der Rechenaufwand weiter reduziert werden.

Unter Anwendung von Verfahren nach dem Stand der Technik können die Personen 18, 19 als fahrstreifenfremde Objekte erkannt werden. Es sind in der Figur 3 die Personen 18, 19 mit eckigen Klammern [ ] und mit jeweils einem Bezugszeichen gekennzeichnet.

Unter Anwendung von Verfahren nach dem Stand der Technik wird auch der Spalt 20 zwischen zwei Betonplatten als eine Diskontinuität im Beobachtungsbereich 4 erkannt.

Das erfindungsgemäße Verfahren stellt sich insbesondere und in Ergänzung zu den formulierten Aufgaben der Aufgabe, ein Verfahren zu einer effizienten Erkennung von relevanten möglichen Kollisionsobjekt 1 und eine relevante Diskontinuität bereitzustellen.

Es wird mit der Recheneinheit eine Anzahl von angrenzenden oder benachbarten Zeilen mit einem Objektbildpunkt ermittelt. In Bezugnahme auf die Figur 3 wird ermittelt, über welche Anzahl von einander angrenzenden und somit nachfolgenden Zeilen sich die Person 18 oder die Person 19 als fahrstreifenfremde Objekte erstreckt. Ebenso wird ermittelt, über welche Anzahl von Zeilen sich der Spalt 20 als fahrstreifenfremdes Objekt erstreckt.

Es wird die jeweils ermittelte Anzahl von Zeilen, über welche Anzahl von Zeilen sich das fahrstreifenfremde Objekt erstreckt, mit einem Grenzwert verglichen. Der Grenzwert kann wie im Rahmen der Beschreibung der Erfindung dargelegt durch den Anwender oder durch eine mathematische Berechnung festgelegt sein.

Es wird in der Recheneinheit ein fahrstreifenfremdes Objekt wie die Person 18 als ein Kollisionsobjekt 1 eingestuft, wenn aneinander angrenzende Objektbildpunkte dieses fahrstreifenfremden Objektes in einer Anzahl von nacheinander folgenden Zeilen größer gleich einem Grenzwert erkannt werden.

Die Person 18, welche Person 18 sich im Fahrstreifen 3 oder Beobachtungsbereich 4 befindet oder in diesem erstreckt, erstreckt sich über eine Anzahl von Zeilen größer als ein definierter Grenzwert. Es wird somit die Person 18 als ein mögliches relevantes Kollisionsobjekt 1 erkannt. Das erfindungsgemäße Verfahren kann den technischen Effekt bieten, dass die begrenzte Rechenleitung der im Fahrzeug 10 angeordneten Recheneinheit auf die Vorhersage einer Kollision zwischen dem Fahrzeug 10 und der Person 18 verwendet wird.

Gleichsam zu der Person 18 wird die Person 19 als ein mögliches relevantes Kollisionsobjekt erkannt. Das erfindungsgemäße Verfahren ist somit nicht auf die Bewertung von sich ausschließlich im Fahrstreifen 3 erstreckende Objekte beschränkt. Die Person 19 als Objekt erstreckt sich über den Fahrstreifen 3 hinaus.

Der Spalt 20, welcher Spalt 20 sich im Fahrstreifen 3 oder Beobachtungsbereich 4 befindet, erstreckt sich über eine Anzahl von Zeilen kleiner dem erwähnten Grenzwert. Es wird somit der Spalt 20 nicht als eine relevante Diskontinuität eingestuft. Das erfindungsgemäße Verfahren kann den technischen Effekt haben, dass keine Rechenleistung der im Fahrzeug 10 angeordneten Recheneinheit auf eine Vorhersage einer Kollision des Fahrzeuge 10 mit dem Spalt 20 angewandt wird.

Der oben verwendete Begriff "relevant" ist als "die Fahrt des Fahrzeuges 10 in Fahrtrichtung 12 beeinflussend" zu verstehen.

Das erfindungsgemäße Verfahren kann sich dadurch auszeichnen, dass in der Recheneinheit eine Mittelachse 6 des Beobachtungsbereiches 4 ermittelt wird, wobei das fahrstreifenfremde Objekt durch ein um die Mittelachse 6 symmetrisches, zeilenweises Analysieren der Teilberieche des Beobachtungsbereiches 4 erfolgt. Es ist diese Sonderform in der Figur 3 durch die Pfeile 5 eingetragen.

Es kann beispielsweise die rechte Schiene 15 als eine hier beispielhaft erwähnte Form einer seitlichen Begrenzung des Fahrstreifens 3 oder des Beobachtungsbereiches 4 in einer Zeile nicht detektierbar sein. Da sich die Mittellinie 6 in der Mitte des Fahrstreifens 3 und somit des Beobachtungsbereiches 4 bekannt ist, ist der Abstand zwischen der Mittellinie 6 und der rechten Schiene 15 ermittelbar. Es kann die zeilenweise Analyse zwischen der Mittellinie 6 und der rechten Schiene 15 um den Abstand, welcher Abstand zwischen der Mittellinie 6 und der linken Schiene 15 gemessen wird, begrenzt werden.

Es ist oben erwähnt, dass jede n-te Zeile (wie oben angegeben) des Beobachtungsbereiches 4 analysiert werden kann. Falls eine Schiene 15 in einer Zeile nicht detektierbar ist, kann die Lage der Schiene 15 in dieser Zeile mittels einer Glättungsfunktion unter Berücksichtigung anderer bekannter Lagen der Schiene 15 abgeschätzt werden. Das erfindungsgemäße Verfahren zeichnet sich dadurch aus, dass die Anwendung der Glättungsfunktion keinen besonderen Einfluss auf das Ergebnis des erfindungsgemäßen Verfahrens hat.

Das erfindungsgemäße Verfahren kann sich dadurch auszeichnen, dass der Fahrstreifen 3 durch seitliche Markierungen 7 des Fahrstreifens 3 detektiert wird. Die Schienen 15 können als Markierungen 7 des Fahrstreifens 3 angesehen werden.

Das erfindungsgemäße Verfahren kann sich dadurch auszeichnen, dass ein Beobachtungsbereich 4 größer als der Fahrsteifen 3 definiert wird, was in der Figur 2 nicht dargestellt ist. Der Beobachtungsbereich 4 kann auf seiner rechten Seite durch die Betonplattenkante 17 definiert sein.

Die Figur 3 zeigt eine Szene eines sich einem Kreuzungsbereich nähernden Fahrzeuges 10 zu einem Zeitpunkt t1. Das Fahrzeug 10 wird vermutlich zu dem Zeitpunkt t1 die Geschwindigkeit reduzieren, wodurch das Fahrzeug 10 zu einem nachfolgenden Zeitpunkt t2 eine geringere Geschwindigkeit als zu dem Zeitpunkt t1 aufweist. Das erfindungsgemäße Verfahren kann zu einem ersten Zeitpunkt t1 unter Verwendung eines Grenzwertes n1 und zu einem Zeitpunkt t2 unter Verwendung eines Grenzwertes n2 durchgeführt werden. Es kann gelten nl<n2.

### Zu Figur 4:

Es wird in der Figur 4 im Besonderen das Verfahren zur Einstufung eines fahrstreifenfremden Objektes als ein Kollisionsobjekt 1 oder als kein Kollisionsobjekt in Detail diskutiert. Die Figur 4 zeigt eine Tabelle, wobei ein Tabellenfeld einen Bildpunkt des Bildes 2 symbolisiert. Es sind weiters bespielhaft die Mittellinie 6 und die Markierungen 7 als Linie in der Figur 4 eingetragen.

Die in Figur 4 eingetragene Tabelle umfasst vier Zeilen 21, 22, 23, 24. Ein Rechteck einer Zeile 21, 22, 23, 24 symbolisiert einen Bildpunkt des Bildes 2.

Es wird die erste Zeile 21 durch eine Analyse der als Rechtecke eingetragenen Bildpunkte der ersten Zeile 21 der ersten Richtung 25 folgend ab dem Ausgangspunkt 8 analysiert. Die Bildpunkte der zweiten Zeile 22 werden in der zweiten Richtung 26 analysiert. Die Bildpunkte der dritten Zeile 23 werden in der dritten Richtung 27 analysiert. Die Bildpunkte der vierten Zeile 28 werden der vierten Richtung 28 folgend analysiert. Zusammenfassend wird der durch die Zeilen 21 bis 24 angezeigte Bereich des Bildes 2 zeilenweise, hier vorzugsweise mit abwechselnden Richtungen analysiert.

Es sind in der Figur 4 und in der Figur 5 die Richtungen 25, 26, 27, 28 in die gleiche Richtung orientiert sind. Es ist auch denkbar, dass die Richtungen 25, 27 in die eine Richtung und die Richtungen 26, 28 in eine zu der einen Richtung entgegengesetzte Richtung orientiert sind.

Es unterscheidet sich definitionsgemäß ein Fahrstreifenbildpunkt des Fahrstreifens 3 von einem Objektbildpunkt eines fahrstreifenfremden Objektes. Es sind nach dem Stand der Technik zahlreiche Verfahren bekannt, welche Verfahren als Ergebnis eine Unterscheidung zwischen einem Fahrstreifen 3 und einem fahrstreifenfremden Objekt liefern.

Es ist nach der gängigen Lehre ein bekanntes Problem, dass die Erkennung von Objekten und somit die Zuweisung von Bildpunkten zu Objekten unter Anwendung von Verfahren nach der gängigen Lehre fehlerhaft sein kann. Das erfindungsgemäße Verfahren führt das oben beschriebene und hier nochmals ergänzend vorgetragene Kriterium ein, um fahrstreifenfremde Objekte zuverlässig zu erkennen. Die fahrstreifenfremden Objekte können gegebenenfalls unter Anwendung von weiteren Verfahren nach dem Stand der Technik als Kollisionsobjekte 1 erkannt werden. Das erfindungsgemäße Verfahren verfolgt insbesondere das Ziel, unrichtiger Weise als Objektbildpunkte eingestufte Bildpunkte als solche zu erkennen.

In der Figur 4 umfassen die unter Anwendung von Verfahren nach dem Stand der Technik als Objektbildpunkte erkannten Bildpunkte ein ausgefülltes Rechteck.

Es wird das erfindungsgemäße Verfahren am Beispiel eines Fußballes 29 veranschaulicht. Der Fußball 29 weist eine Größe auf, sodass der Fußball 29 durch zumindest drei aneinander angrenzende Zeilen im Bild 2 dargestellt wird. Ein durch weniger Zeilen dargestellter Fußball wäre vom Fahrzeug 10 zu weit entfernt und würde keinesfalls ein Kollisionsobjekt 1 darstellen.

Es wird in der Recheneinheit ein fahrstreifenfremdes Objekt als ein Kollisionsobjekt 1 eingestuft, wenn aneinander angrenzende Objektbildpunkte dieses fahrstreifenfremden Objektes, hier des Fußballes 29 in einer Anzahl von nacheinander folgenden Zeilen größer gleich einem Grenzwert, hier drei erkannt werden. Es wird somit der in Figur 4 dargestellte Fußball 29, dessen Objektbildpunkte sich über drei Zeilen erstrecken als ein mögliches Kollisionsobjekt 1 erkannt.

Ein weiteres Objekt 30, welches weitere Objekt sich nur über eine Zeile und somit über weniger als drei Zeilen erstreckt, wird in der Recheneinheit als kein mögliches Kollisionsobjekt 1 erkannt.

Der Anwender kann den Grenzwert von hier drei Zeilen festlegen. Der Grenzwert kann auch in Abhängigkeit des unter Anwendung von Verfahren nach dem Stand der Technik erkannten Verfahren erkannten Objektes festgelegt werden. Die Recheneinheit kann insbesondere mit einer Datenbank verbunden sein, in welcher Datenbank Grenzwerte abgespeichert sind, welche Grenzwerte einem durch ein Verfahren nach dem Stand der Technik erkannten Objekt zugewiesen werden.

Es kann weiters die Erstreckung des im Bild 2 der Figur 4 eingetragenen Fußballs in der Recheneinheit ermittelt werden.

Die Erstreckung kann beispielsweise die Anzahl der Teilbereiche in horizontaler Richtung und/oder vertikaler Richtung und/oder Gesamtzahl der Teilbereiche mit einem Bildpunkt des Fußballes 29 umfassen. Die Anzahl der Teilbereiche in vertikaler Richtung und/oder in horizontaler Richtung kann der Höhe beziehungsweise der Breite des fahrstreifenfremden Objektes entsprechen.

Das erfindungsgemäße Verfahren kann umfassen, dass die Erstreckung mit einer Schwellenerstreckung verglichen wird. Die Recheneinheit stuft den Fußball 29 als das fahrstreifenfremde Objekt als ein Kollisionsobjekt ein, wenn die Erstreckung größer oder gleich der Schwellenerstreckung ist. Die Recheneinheit stuft den Fußball 29 als das fahrstreifenfremde Objekt als kein Kollisionsobjekt ein, wenn die Erstreckung kleiner der Schwellenerstreckung ist.

Es zeigt weiters die Figur 4 ein Bild 2 zu einem ersten Zeitpunkt und die Figur 5 ein Bild 2 zu einem zweiten Zeitpunkt. Es kann das in Figur 4 gezeigte Bild 2 unter Verwendung eines ersten Grenzwertes von beispielhaft drei Zeilen analysiert werden. Es kann weiters das erfindungsgemäße Verfahren auf das in Figur 5 gezeigte Verfahren angewandt werden, wobei ein zweiter Grenzwert von beispielhaft vier Zeilen angewandt wird. Der erste Zeitpunkt kann vor dem zweiten Zeitpunkt liegen. Es kann so beispielsweise erkannt werden, dass der Abstand zwischen dem Fußball 29 und der Kamera 13 zwischen dem ersten Zeitpunkt und dem zweiten Zeitpunkt verringert wird.

### Zu Figur 6:

Die Figur 6 zeigt ein von einer Kamera 13 (siehe Figur 1) erstelltes Bild 2. Das Bild umfasst den Fahrstreifen 3 des Fahrzeuges 10 (siehe Figur 1) und einen im Fahrstreifen 3 angeordnetes Kollisionsobjekt 1. Es ist hierbei unerheblich, ob das Kollisionsobjekt 1 auf den Fahrstreifen 3 liegt oder in der in der Figur 6 gezeigten Projektion liegt.

Das anhand der Figur 6 diskutierte Verfahren dient dem effizienten Erkennen eines Kollisionsobjektes 1 oder einer Diskontinuität in dem Bild 2. Ein Erkennen eines Kollisionsobjekts 1 umfasst das Detektieren des Objektes in dem Fahrstreifen 3 und das Klassifizieren des Objektes als ein Kollisionsobjekt 1.

In einem ersten Schritt wird der Fahrstreifen 3 erkannt, in welchem Fahrstreifen 3 das Fahrzeug 11 bewegt wird.

Der Fahrstreifen 3 kann bei einem schienengebundenen Fahrzeug 11 durch die Gleise 11 definiert sein. Es kann weiters ein Beobachtungsbereich 4 definiert werden, welcher Beobachtungsbereich 4 den Fahrstreifen 3 und einen an den Fahrstreifen 3 angrenzenden seitlichen Bereich umfasst (siehe auch obige Beschreibung). Der Beobachtungsbereich 4 ist seitlich durch Begrenzungslinien 9 begrenzt, welche Begrenzungslinien 9 sich in einem definierten Abstand zu den Schienen des Gleises 11 erstrecken. Der Beobachtungsbereich 4 umfasst den Fahrstreifen 3.

Es kann der Interessensbereich durch den Fahrstreifen 3 oder durch den Beobachtungsbereich 4 definiert werden.

Der Interessensbereich ist seitlich durch die den Fahrstreifen 3 begrenzenden Schienen des Gleises 11 beziehungsweise durch die Begrenzungslinien 9 begrenzt.

Der Interessensbereich ist unten durch die Bildkante begrenzt.

Der Interessensbereich ist oben durch die obere Bildkante begrenzt. Alternativ zu der Begrenzung durch die obere Bildkante oder durch die untere Bildkante kann der Interessensbereich durch eine zu der jeweiligen Bildkante parallelen Geraden begrenzt werden.

Es kann mit einer Recheneinheit im Fahrstreifen 3 beziehungsweise Beobachtungsbereich 4 oder in der Projektion auf diese 3, 4 ein Objekt detektiert werden, welches Objekt ein mögliches Kollisionsobjekt 1 darstellt. Nach der gängigen Lehre wird bei einer Detektion eines Objektes eine Grenzfläche 31 (englisch bonding box) ermittelt. Die Grenzfläche 31 weist im Bild 2 in einer vorteilhaften Weise eine größere Fläche als das mögliche Kollisionsobjekt 1 auf. Es kann somit der Interessensbereich durch die flächenmäßige Erstreckung des möglichen Kollisionsobjektes 1, im Besonderen die detektierte flächenmäßige Erstreckung des möglichen Kollisionsobjektes 1 und somit durch die Grenzfläche 31 definiert werden.

Der Interessensbereich kann somit durch den Fahrstreifen 3 oder den Beobachtungsbereich 4 oder durch das detektierte Objekt als mögliches Kollisionsobjekt 1 oder durch dessen Grenzflächen 31 definiert werden.

Eine mögliche Ausführungsform des erfindungsgemäßen ist, dass bei keiner Detektion eines Objektes in dem Fahrstreifen 3 oder in dem Beobachtungsbereich 4 der Interessensbereich durch den Fahrstreifen 3 oder den Beobachtungsbereich 4 definiert ist. Bei einer Detektion eines Objektes wird der Interessensbereich durch den Grenzbereich 31 des Objektes definiert. Es wird der Interessensbereich somit an die jeweilige Situation angepasst.

Es kann das Bild 2 mit der Kamera 13 mit einer ersten Auflösung erstellt werden und an eine Recheneinheit übermittelt werden. In der Recheneinheit wird die Auflösung des Bildes 2 mit Ausnahme des Interessensbereiches auf eine zweite Bildauflösung reduziert. Dieser Verfahrensschritt impliziert, dass das Bild 2 in den Interessensbereich und in einen weiteren Bereich unterteilt wird, wobei der weitere Bereich als jener Bereich des Bildes definiert ist, welcher weitere Bereich als kein Interessensbereich definiert ist. Der weitere Bereich ist der an den Interessensbereich angrenzende Teilbereich des Bildes 2.

Es kann das Bild 2 in einer zweiten Bildauflösung vorliegen. Es kann in dem Bild 2 der Interessensbereich ermittelt werden. Es können mit einer weiteren Kamera Bilddaten über den Interessensbereich mit einer ersten Bildauflösung erstellt werden.

Es werden von der Recheneinheit Bilddaten erstellt, welche Bilddaten den Interessensbereich mit einer ersten Bildauflösung und den weiteren Bereich des Bildes mit einer zweiten Bildauflösung beschrieben. Die erste Bildauflösung ist vorzugsweise höher als die zweite Bildauflösung. Die erste Bildauflösung kann die höchste mit der Kamera 13 beziehungsweise der weiteren Kamera erstellbare Bildauflösung sein. Die zweite Bildauflösung ist vorzugsweise ein minimale Bildauflösung zur Analyse des Bildes oder der weiteren Bereiche, falls eine Analyse der weiteren Bereiche erforderlich ist.

Das erfindungsgemäße Verfahren kann sich dadurch auszeichnen, dass
der Interessensbereich im Bild mit einer ersten Bildauflösung an die Recheneinheit übermittelt wird und die an den Interessensbereich angrenzenden Teilbereiche des Bildes mit einer zweiten Bildauflösung an die Recheneinheit übermittelt wird, sodass
eine Klassifikation des Objektes in der Recheneinheit mit einem neuronalen Netz unter Verwendung der ersten Bildauflösung durchgeführt wird und eine Analyse der an den Interessensbereich angrenzenden Teilbereiche in der Recheneinheit mit einem neuronalen Netz unter Verwendung der zweiten Bildauflösung durchgeführt wird,
wobei die erste Bildauflösung höher ist als die zweite Bildauflösung.

## Patentansprüche

1. Verfahren zur Einstufung eines erkannten Objektes entweder als ein Kollisionsobjekt (1) oder als eine Diskontinuität in einem Bild (2),
welches Bild (2) durch eine Kamera (13) aufgenommen wird,
welche Kamera (13) in eine Fahrtrichtung (12) gerichtet auf einem Fahrzeug (10) angeordnet ist,
welches Fahrzeug (10) auf einem Fahrstreifen (3) bewegt wird,
welches Kollisionsobjekt (1) oder welche Diskontinuität bei einem Kontakt mit dem Fahrzeug (12) einen Schaden am Fahrzeug verursachen kann,
**dadurch gekennzeichnet, dass**
mittels einer Recheneinheit in dem einen Bild (2) zumindest der Fahrstreifen (3) als Beobachtungsbereich (4) detektiert wird, wobei
mit der Recheneinheit fahrstreifenfremde Objekte durch ein bereichsweises Analysieren (5) von Teilbereichen des Beobachtungsbereiches (4) detektiert werden,
wobei sich ein fahrstreifenfremdes Objektbildpunkt des fahrstreifenfremden Objekts in dem einen Bild (2) von einem Fahrstreifenbildpunkt des Fahrstreifens (3) unterscheidet, wobei
mit der Recheneinheit eine Anzahl von den angrenzenden Teilbereichen mit einem Objektbildpunkt des fahrstreifenfremden Objektes als ein Maß für die relevante Größe des in dem einen Bild detektierten fahrstreifenfremden Objektes in dem einen Bild ermittelt wird, und wobei
in der Recheneinheit ein fahrstreifenfremdes Objekt der fahrstreifenfremden Objekte als ein Kollisionsobjekt (1) oder als eine Diskontinuität im Beobachtungsgereich (4) eingestuft wird, wenn aneinander angrenzende Objektbildpunkte dieses fahrstreifenfremden Objektes in einer Anzahl von angrenzenden oder benachbarten Teilbereichen größer gleich einem Grenzwert erkannt werden,
welcher Grenzwert in der Recheneinheit in Abhängigkeit einer Geschwindigkeit des Fahrzeuges (10) der Relativgeschwindigkeit des Fahrzeuges (10) zu dem fahrstreifenfremden Objekt und/oder der Auflösung des Bildes (2) und/oder einer Klassifikation des fahrstreifenfremden Objektes definiert wird.

2. Verfahren zum Erkennen eines Kollisionsobjektes (1) oder einer Diskontinuität in einem Bild (2), welches Bild (2) durch eine Kamera (13) aufgenommen wird,
welche Kamera (13) in eine Fahrtrichtung (12) gerichtet auf einem Fahrzeug (10) angeordnet ist,
welches Fahrzeug (10) auf einem Fahrstreifen (3) bewegt wird,
welches Kollisionsobjekt (1) oder welche Diskontinuität bei einem Kontakt mit dem Fahrzeug (12) einen Schaden am Fahrzeug verursachen kann,
**dadurch gekennzeichnet, dass**
mittels einer Recheneinheit in dem Bild (2) zumindest der Fahrstreifen (3) als Beobachtungsbereich (4) detektiert wird, wobei
mit der Recheneinheit fahrstreifenfremde Objekte durch ein bereichsweises Analysieren (5) von Teilbereichen des Beobachtungsbereiches (4) detektiert werden,
wobei sich ein fahrstreifenfremdes Objektbildpunkt des fahrstreifenfremden Objekts in dem Bild (2) von einem Fahrstreifenbildpunkt des Fahrstreifens (3) unterscheidet, wobei
mit der Recheneinheit eine Anzahl von angrenzenden Teilbereichen mit einem Objektbildpunkt des fahrstreifenfremden Objektes als ein Maß für die relevante Größe des im Bild detektierten fahrstreifenfremden Objektes ermittelt wird, und wobei in der Recheneinheit ein fahrstreifenfremdes Objekt der fahrstreifenfremden Objekte als ein Kollisionsobjekt (1) oder als eine Diskontinuität im Beobachtungsgereich (4) eingestuft wird, wenn aneinander angrenzende Objektbildpunkte dieses fahrstreifenfremden Objektes in einer Anzahl von angrenzenden oder benachbarten Teilbereichen größer gleich einem Grenzwert erkannt werden, und
in der Recheneinheit ein fahrstreifenfremdes Objekt der fahrstreifenfremden Objekte als kein Kollisionsobjekt oder als keine Diskontinuität im Beobachtungsbereich (4) eingestuft wird, wenn Objektbildpunkte dieses fahrstreifenfremden Objektes in einer Anzahl von angrenzenden oder benachbarten Teilbereichen kleiner einem Grenzwert erkannt werden,
welcher Grenzwert von einem Benutzer oder in der Recheneinheit in Abhängigkeit einer Geschwindigkeit des Fahrzeuges (10) und/oder der Relativgeschwindigkeit des Fahrzeuge (10) zu dem fahrstreifenfremden Objekt und/oder der Auflösung und/oder einer Klassifikation des fahrstreifenfremden Objektes des Bildes (2) definiert ist.

3. Verfahren nach einem der Ansprüche 1 bis 2, **dadurch gekennzeichnet, dass**
in der Recheneinheit ein fahrstreifenfremdes Objekt als ein Kollisionsobjekt (1) oder als eine Diskontinuität eingestuft wird, wenn aneinander angrenzende Objektbildpunkte dieses fahrstreifenfremden Objektes in einer Anzahl angrenzenden oder benachbarten Zeilen Teilbereichen kleiner gleich einem weiteren Grenzwert erkannt werden.

4. Verfahren nach einem de Ansprüche 1 bis 3, **dadurch gekennzeichnet, dass**
das bereichsweise Analysieren als ein Analysieren von einem angrenzenden oder benachbarten Teilbereich nach einem weiteren angrenzenden oder benachbarten Teilbereich durchgeführt wird.

5. Verfahren nach einem der Ansprüche 1 bis 4, **dadurch gekennzeichnet, dass**
das bereichsweise Analysieren als ein zeilenweises Analysieren von Teilbereichen, insbesondere von angrenzenden oder benachbarten Teilbereichen durchgeführt wird.

6. Verfahren nach einem der Ansprüche 1 bis 5, **dadurch gekennzeichnet, dass**
das fahrstreifenfremde Objekt durch einen Vergleich zumindest eines Bildteilbereiches des Bildes (2) mit einem Referenzbildteilbereich eines Referenzbildes erkannt wird.

7. Verfahren nach einem der Ansprüche 1 bis 6, **dadurch gekennzeichnet, dass**
in der Recheneinheit eine Mittelachse (6) des Beobachtungsbereiches (4) ermittelt wird,
wobei das fahrstreifenfremde Objekt durch ein um die Mittelachse (6) symmetrisches, zeilenweises Analysieren der Teilberieche des Beobachtungsbereiches (4) erfolgt.

8. Verfahren nach einem der Ansprüche 1 bis 7, **dadurch gekennzeichnet, dass**
der Fahrstreifen (3) durch seitliche Markierungen (7) des Fahrstreifens (3) detektiert wird.

9. Verfahren nach einem der Ansprüche 1 bis 8, **dadurch gekennzeichnet, dass**
ein Beobachtungsbereich (4) größer als der Fahrsteifen (3) definiert wird.

10. Verfahren nach einem der Ansprüche 1 bis 9, **dadurch gekennzeichnet, dass**
das Verfahren unter Verwendung eines zu einem ersten Zeitpunkt aufgenommenen ersten Bildes (2) mit einem ersten Grenzwert von n1 Zeilen und
das Verfahren unter Verwendung eines zu einem zweiten Zeitpunkt aufgenommenen zweiten Bildes (2) mit einem zweiten Grenzwert von n2 Zeilen durchgeführt wird.

11. Verfahren nach Anspruch 4 und 10, **dadurch gekennzeichnet, dass**
das zweite Bild (2) das Referenzbild ist.

12. Verfahren nach einem der Ansprüche 1 bis 11, **dadurch gekennzeichnet, dass**
die Recheneinheit zu mehreren Zeitpunkten die Anzahl der Teilbereiche ermittelt, wobei
die Recheneinheit das fahrstreifenfremde Objekt als ein Kollisionsobjekt oder eine Diskontinuität einstuft, wenn die Anzahl der Teilbereiche zu den Zeitpunkten gleichbleibend oder größerwerdend ist, oder
die Recheneinheit das fahrstreifenfremde Objekt als kein Kollisionsobjekt oder keine Diskontinuität einstuft, wenn die Anzahl der Teilbereiche zu den Zeitpunkten kleinerwerdend ist.

13. Verfahren zum Erkennen eines Kollisionsobjektes (1) oder einer Diskontinuität in einem Bild (2), welches Bild (2) durch eine Kamera (13) aufgenommen wird,
welche Kamera (13) in eine Fahrtrichtung (12) gerichtet auf einem Fahrzeug (10) angeordnet ist,
welches Fahrzeug (10) auf einem Fahrstreifen (3) bewegt wird,
welches Kollisionsobjekt (1) oder welche Diskontinuität bei einem Kontakt mit dem Fahrzeug (12) einen Schaden am Fahrzeug verursachen kann,
**dadurch gekennzeichnet, dass**
mittels einer Recheneinheit in dem Bild (2) zumindest der Fahrstreifen (3) als Beobachtungsbereich (4) detektiert wird, wobei
mit der Recheneinheit fahrstreifenfremde Objekte detektiert werden,
wobei sich ein fahrstreifenfremdes Objektbildpunkt des fahrstreifenfremden Objekts in dem Bild (2) von einem Fahrstreifenbildpunkt des Fahrstreifens (3) unterscheidet,
wobei eine mit der Recheneinheit ermittelte Erstreckung des fahrstreifenfremden Objektes mit einer in einer Datenbank hinterlegten Schwellenerstreckung verglichen wird, wobei
in der Recheneinheit ein fahrstreifenfremdes Objekt der fahrstreifenfremden Objekte als ein Kollisionsobjekt (1) oder als eine Diskontinuität im Beobachtungsbereich (4) eingestuft wird, wenn die Erstreckung des fahrstreifenfremden Objektes größergleich der Schwellenerstreckung ist, oder
in der Recheneinheit ein fahrstreifenfremdes Objekt der fahrstreifenfremden Objekte als keine Kollisionsobjekt oder als keine Diskontinuität erkannt wird, wenn die Erstreckung des fahrstreifenfremden Objektes kleiner als die Schwellenerstreckung ist.

14. Verfahren nach Anspruch 13, **dadurch gekennzeichnet, dass**
die Recheneinheit zu mehreren Zeitpunkten die Erstreckung ermittelt, wobei
die Recheneinheit das fahrstreifenfremde Objekt als ein Kollisionsobjekt oder eine Diskontinuität einstuft, wenn die Erstreckung zu den Zeitpunkten gleichbleibend oder größerwerdend ist, oder
die Recheneinheit das fahrstreifenfremde Objekt als kein Kollisionsobjekt oder keine Diskontinuität einstuft, wenn die Erstreckung zu den Zeitpunkten kleiner werdend ist.

15. Verfahren nach einem der Ansprüche 1 bis 14,
**dadurch gekennzeichnet, dass**
in einer Recheneinheit ein Interessensbereich ermittelt wird,
welcher Interessensbereich durch den Fahrstreifen und gegebenenfalls durch einen an den Fahrstreifen angrenzenden Bereich mit einer vorgegebenen Breite definiert ist.

16. Verfahren nach einem der Ansprüche 1 bis 14,
**dadurch gekennzeichnet, dass**
in einer Recheneinheit in dem Bild ein Interessensbereich als ein Teilbereich des Bildes ermittelt wird,
welcher Interessensbereich durch die Grenzflächen eines in dem Bild detektierten Objektes gebildet wird, welches Objekt in einer Recheneinheit unter Erstellung der Grenzflächen mit einem neuronalen Netz detektiert wird.

17. Verfahren nach Anspruch 15, **dadurch gekennzeichnet, dass**
der Interessensbereich im Bild mit einer ersten Bildauflösung an die Recheneinheit übermittelt wird und die an den Interessensbereich angrenzenden Teilbereiche des Bildes mit einer zweiten Bildauflösung an die Recheneinheit übermittelt wird, sodass
eine Klassifikation des Objektes in der Recheneinheit mit einem neuronalen Netz unter Verwendung der ersten Bildauflösung durchgeführt wird und
eine Analyse der an den Interessensbereich angrenzenden Teilbereiche in der Recheneinheit mit einem neuronalen Netz unter Verwendung der zweiten Bildauflösung durchgeführt wird,
wobei die erste Bildauflösung höher ist als die zweite Bildauflösung.

18. Verfahren nach einem der Ansprüche 15 bis 16, **dadurch gekennzeichnet, dass**
der Interessensbereich mit einer weiteren Kamera aufgenommen wird.
